# EUROPEAN PATENT APPLICATION

(11) **EP 3 151 216 A1**
(43) Date of publication of application: **05.04.2017**
(21) Application number: 15187888.1
(22) Date of filing: 01.10.2015
(51) Int. Cl.: G08G 1/16

(54) **METHOD FOR PROVIDING AN ALERT TO A DRIVER AND AN ALERT SYSTEM**

(71) Applicant: Volvo Car Corporation, 40 531 Göteborg (SE)
(72) Inventor: Israelsson, Erik, 41663 Göteborg (SE); Magnusson, Martin, 44231 Kungälv (SE)
(74) Representative: Volvo Car Corporation

(57) **Abstract**

The invention relates to a method for providing an alert to a driver of a vehicle, the method comprising the steps of:
a) receiving information from vehicle-to-vehicle communication unit relating to a deceleration of a vehicle-in-front
b) detecting a decrease in distance to a closest vehicle-in-front by a vehicle sensor system in the vehicle;
c) issuing an alert to the driver of the vehicle as a response to step b.

## Description

### TECHNICAL FIELD

The invention relates to a method and a system for providing an alert to a driver of a vehicle. The invention can be applied in automobiles such as cars, heavy-duty vehicles, such as trucks, buses and construction equipment and the like.

### BACKGROUND OF THE INVENTION

Recently, vehicles are being equipped with a variety of informational systems such as navigation systems, satellite radio systems, weather information systems, two-way satellite services, built-in cell phones, DVD players and the like. These systems are sometimes interconnected for increased functionality. Various informational systems have been proposed that use wireless communications between vehicles and between infrastructures, such as roadside units. These wireless communications have a wide range of applications ranging from safety warnings to entertainment systems. For instance, once a potential safety concern is determined to exist, a warning system in the vehicles would notify the driver of the potential safety concern so that the driver can take the appropriate action.

US8854198 discloses a forward vehicle brake warning system. A host vehicle using a vehicle-to-vehicle communication system gives a warning to an operator of the host vehicle of a potential danger ahead, by processing messages from neighboring vehicles to determine if one or more of the neighboring vehicles suddenly applied its brakes.

DE102013211132 discloses a collision avoidance system that alerts drivers before a possible collision danger which lie in the range of vision of the driver or outside the range of vision of the driver. The system receives status data of one or more collision avoidance systems and determines a warning mode of operation on basis of the status data and optional coordinating of warning sample.

DE102013212255 discloses a method for exchanging information between at least two vehicles by means of vehicle-to-vehicle communication to alert a driver when preceding vehicles are braking.

DE102013222880 discloses a method for use in an active safety system installed on a host vehicle to avoid collision with several other vehicles. The method comprises acquiring, for each of a plurality of target objects in the path of the host vehicle, both visible and non-visible, a value of a parameter that presents the likelihood that the host vehicle will collide with the target object.

DE102013001326 discloses a vehicle control device which is provided in a vehicle and performs vehicle control for improving the amount of traffic on the road, especially traffic recognition. The vehicle control device includes a vehicle-to-vehicle communication device, which performs vehicle-to-vehicle communication to transmit or receive information about the position or speed of system-provided vehicles other than the host vehicle from a road infrastructure, such as a beacon communication device.

The above-mentioned systems of the prior art issue a warning when anything unexpected or potentially dangerous occurs on the road. When the traffic is busy, e.g. during rush hours in metropolises, the number of warnings provided to the driver may be significant, which may be perceived as disturbing or distracting. Too many warnings may stress the driver, who eventually may start disregarding the warnings, which increases the risk of an accident.

Vehicle connectivity allows vehicle system to alert drivers of when other preceding cars braking harsh. This is beneficial in traffic situations with high speeds and dense traffic when queues are building up, e.g. in every day commuting situations. An early brake warning can help drivers to react promptly to initiate a controlled retardation of the own vehicle, but without stress. Ideally, the early braking alert can even dampen out a pattern of harsh braking that otherwise could tend to escalate in a direction opposite to the direction of the traffic with risk of a pile-up.

This type of brake warning based on connectivity allows earlier warnings than radar-based systems (FCW, forward collision warning). The benefit of the connected system is that it can connect the vehicle with other vehicles further ahead in traffic so that it "sees through" the cars directly in front of it, to detect if visually obscured cars further ahead are braking hard. So, when a driver further ahead slams the brakes, the following cars can get this information and alert the driver much earlier that the radar-based system. Incongruously, the benefit of having early information of a possible stagnation of traffic is also a potential problem to the realization of an efficient warning function. The problem is that, when a car traveling a significant distance ahead of the host vehicle, e.g. 3-5 cars ahead, brakes hard, this event is reported to the host vehicle, e.g. by a cloud-based safety system. At that point, there might not be any obvious visual sign to the driver of the host vehicle that can confirm the warning, since the vehicle in front might not yet have started braking in this type of backward propagating braking pattern. There is a high risk that this early type of driver alert without a visible confirmation in the observed traffic environment will not be acknowledged by the driver. Moreover, there is a risk that such an alert, after being discarded by the driver due to lack of any visible confirmation, might prevent the driver from quickly reacting when the closest vehicle-in-front brakes just a few seconds later. The first alert, incorrectly perceived as false by the driver, might put the driver in a mode where he/she is less quick to react to another alert, just seconds later.

In view of the above, there exists a need for an improved method and system for issuing an alert to the driver, in particular when there is an immediate risk for a collision.

### SUMMARY OF THE INVENTION

An object of the invention is to provide a method for providing an alert to a driver of a vehicle, when the closest vehicle-in-front decelerates and the distance to the closest vehicle-in-front decreases.

According to a first aspect of the invention, the object is achieved by a method according to claim 1. According to a second aspect of the invention, the object is achieved by an alert system according to claim 8.

The method according to one aspect of the invention comprises the steps of:
a) receiving information from vehicle-to-vehicle communication unit relating to a deceleration of a vehicle-in-front;
b) detecting a decrease in distance to a closest vehicle-in-front by a vehicle sensor system in the vehicle;
c) issuing an alert to the driver of the vehicle as a response to step b.

In order to avoid having the alert being issued when there are no visible confirmations to the driver, the system is designed to wait until a camera, radar or LIDAR system in the car detects a deceleration of a preceding vehicle.

The method above has the advantage of issuing an alert only when the closest vehicle-in-front decelerates, and the distance to the closest vehicle-in-front decreases. In other words, according to the method of the present invention, the alert is issued only when there is a risk of collision with the closest vehicle-in-front, thus eliminating unnecessary alerts. If the alerts are given too often, the driver may become annoyed, and eventually start disregarding the alerts, thus increasing the risk for a critical alert to be ignored, potentially causing an accident.

The method according to the present invention is to use the information that is received by the host vehicle to issue a relevant brake alert to the driver in combination with information available for the sensor systems in the car. In order to avoid having the alert being issued when there is no visible confirmation to the driver, the system of the present invention will be designed to wait just until the camera, radar or lidar system in the car detects just the slightest deceleration of the closest vehicle-in-front. Such a deceleration, even a small one, will imply that the closest vehicle-in-front is braking and that its brake lights will be lit. This visual confirmation can be sufficient for the driver, allowing the driver to react correctly to the warning issued by the system. Thus, according to the method of the present invention, the risk that the alert issued by the system is perceived by the driver as false, and thus ignored, is reduced. Also, the risk that the mistakenly perceived false alarm puts the driver in a less responsive state is eliminated.

According to one embodiment, the vehicle sensor system detects a deceleration of the closest vehicle-in-front.

According to a further embodiment, the method comprises a step to alert to the driver to brake.

According to a further embodiment, the alert is issued as visual, tactile and/or audible alert. The visual alert may be a text message, a graphic message, a twinkling light or the like. The tactile alert may be a vibration in the steering wheel or in the chair. The audible alert may be a continuous or discrete beeping noise, a recorded voice message or the like. The alert may further be a combination of one or several of the above-mentioned visual, tactile and audible alerts.

As mentioned above, the vehicle sensor system detects a decrease in distance to a closest vehicle-in-front. If when detecting a decrease in distance to a closest vehicle-in-front by a vehicle sensor system in the vehicle, the detected decrease in distance to a closest vehicle-in-front exceeds a threshold value, the issuing of the alert may be made with a higher degree of enforcement than for a detected decrease in distance to a closest vehicle-in-front below the threshold value. For instance, the higher degree of enforcement may be a different content of the text message or the graphic message, a higher twinkling frequency of the light, a more distinct vibration of the steering wheel or the chair, or a higher volume of the audible alert. It is further conceivable that the higher degree of enforcement may be addition of an alert. Thus, a tactile alert or an audible alert may be added to the visual alert if the detected decrease in distance to a closest vehicle-in-front exceeds a threshold value.

According to a further embodiment, the vehicle-to-vehicle communication unit may comprise a cell network, cloud or an automotive Wi-Fi. It is conceivable that the vehicle-to-vehicle communication unit comprises a combination of a cell network, cloud, and/or an automotive Wi-Fi.

According to yet another embodiment, the vehicle sensor system may comprise a camera, a video system, a radar, a LIDAR system or any combination thereof.

The present invention further relates to an alert system for a vehicle. The system comprises:
- a vehicle-to-vehicle communication unit, the vehicle-to-vehicle communication unit arranged to receive information relating to deceleration of a vehicle-in-front;
- a vehicle sensor system, the vehicle sensor system arranged to detect a decrease in distance to a closest vehicle-in-front
wherein the alert system receives information from the vehicle-to-vehicle unit relating to deceleration of a vehicle-in-front and, when the vehicle sensor system detects a decrease in distance to a closest vehicle-in-front, the vehicle sensor system issues an alert to a driver of the vehicle.

The present invention also relates to a vehicle comprising an alert system as disclosed herein.

### BRIEF DESCRIPTION OF THE DRAWINGS

Non-limiting embodiments of the present invention will be described in greater detail with reference to the accompanying drawings in which;
- Fig. 1: is a schematic view of vehicles travelling in a road and;
- Fig. 2: is a flow chart of the method according to the present invention.

### DETAILED DESCRIPTION

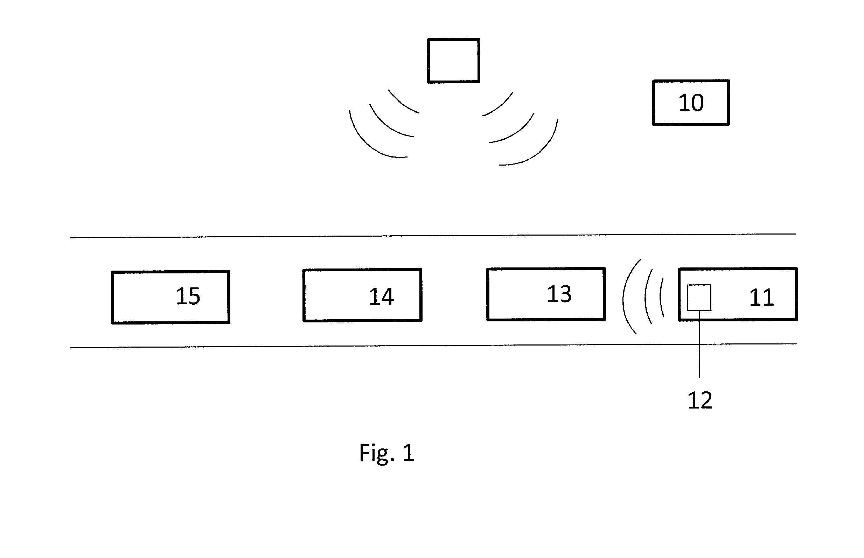

Fig. 1 shows a number of vehicles 11, 13, 14, 15, in this case several cars, moving in the same direction along a road. Although the invention will be described with respect to a car, the invention is not restricted to this particular vehicle, but may also be used with other types of vehicles. The host vehicle 11 is provided with a vehicle sensor system 12, being able to detect a decrease in distance to a closest vehicle-in-front. The system further comprises a vehicle-to-vehicle communication unit 10, arranged to receive information relating to deceleration of a vehicle-in-front. As disclosed above, the vehicle-to-vehicle communication unit 10 receives information relating to deceleration of any of the vehicles-in-front 13, 14, 15. The vehicle sensor system 12 in the host vehicle 11 detects a decrease in distance to the closest vehicle-in-front 13, and issues an alert to the driver. As mentioned above, the alert may exhort the driver to brake. The alert may be a visual alert, a tactile alert, an audible alert, or a combination thereof. The alert system has the advantage of issuing an alert only when there is a risk of collision between the host vehicle 11 and the vehicle being closest vehicle-in-front 13, thus eliminating the risk, or at least reducing the risk, that a too early alert is ignored by the driver.

The vehicle sensor system 12 according to the invention comprises, in its most simple form, a monitoring unit which is configured for monitoring a road for detecting the relative approach of road users to the host vehicle and providing a first signal indicative thereof. This monitoring unit may consist of one or more sensors of a suitable type, e.g. one or more sensors utilizing electromagnetic radiation. Accordingly, the one or more sensors may be radar-operated sensors. The monitoring unit may also consist of cameras or lasers or any suitable combination of different sensors.

A video image processor (VIP) is a combination of hardware and software which extracts desired information from data provided by an imaging sensor. This imaging sensor can be a conventional TV camera or an infrared camera.

There are two types of infrared (IR) detectors, active and passive. Active infrared sensors operate by transmitting energy from either a light emitting diode (LED) or a laser diode. An LED is used for a non-imaging active IR detector, and a laser diode is used for an imaging active IR detector. In both types of detectors the LED or laser diode illuminates the target, and the reflected energy is focused onto a detector consisting of a pixel or an array of pixels. A passive infrared system detects energy emitted by objects in the field of view and may use signal-processing algorithms to extract the desired information. It does not emit any energy of its own for the purposes of detection.

Microwave radar operates by measuring the energy reflected from target vehicles within the field of view. Photoelectric devices commonly consist of two components, the light source and the detector. These may both be in the same place, or placed across from each other. When placed across from each other, the detector is activated whenever something obstructs the illumination from the light source.

The alert system according to the invention further comprises a managing unit (not shown) which is operatively connected to the monitoring unit. This connection may be by means of a signal line or wireless. The managing unit is configured for activating, in response to the first signal from the monitoring unit via the connection therewith, an alert to the driver of the host vehicle. As mentioned above, the alert may be a tactile alert, a visual alert or an audible alert.

The vehicle-to-vehicle communication unit 10 receives information regarding deceleration of a vehicle-in-front 13, 14, 15. This information is transmitted to the managing unit of the host vehicle 11. The information is stored in the managing unit without further action, until the monitoring unit, configured for monitoring adjacent lanes of the road, primarily adjacent lanes in front of the vehicle 11, for detecting the relative approach of road users 13, 14, 15 in the adjacent lanes to the vehicle, and for detecting road users driving in the same direction, provides a signal indicative of the presence of approaching road user 13. This signal is transmitted to the managing unit through a line or wirelessly.

As mentioned above, the monitoring unit may comprise at least one sensor utilizing electromagnetic radiation, i.e. it may be e.g. a radar-operated sensor or an infrared sensor. It may also comprise at least one camera. However, the monitoring unit may comprise any other number and suitable type of sensor or scanning equipment for the intended purpose. If already present in the host vehicle 11, it is possible to configure in-vehicle sensors such as blind-spot sensors for the above-mentioned monitoring and detecting functions. A suitable monitoring reach of the vehicle sensor system may be 0,1-40 m, preferably 0,1-35 m, more preferably 0,1-30 m.

The managing unit of the alert system according to the invention is, as indicated, operatively coupled to the vehicle sensor system 12 and the vehicle-to-vehicle communication unit 10. The purpose is to manage the issuing of an alert to the user in response to the signals from the vehicle sensor system 12 and vehicle-to-vehicle communication system. The managing unit may be a computer of a suitable type or comprise any other unit for the intended purpose.

The monitoring unit of the alert system described above may e.g. be supplemented with additional sensors which can be mounted in strategic positions on the vehicle. The alert system may form part of or be combined with driver support systems that actively assist drivers both in normal traffic conditions as well as in hazardous traffic situations, or form part of or be combined with other collision avoidance systems which aim at assisting drivers in near crash situations where time is very critical and therefore may act autonomously.

As already stated, detection of other vehicles 13, 14, 15 may be carried out by wireless communication between the vehicle-to-vehicle communication system and the managing unit. The incoming message relevancy component is configured to perform a relevancy determination of the hard brake messages received based on whether the hard brake messages received are from the closest vehicle-in-front 13. If the hard brake message received is confirmed be the vehicle sensor system 12, an alert is issued by the managing unit. Further, the managing unit may assess the deceleration rate of the vehicle-in-front 13, or decrease in distance to the closest vehicle-in-front, and, in case when the deceleration rate is above a threshold value, issues an alert with higher degree of enforcement than for a detected decrease in distance to a closest vehicle-in-front below the threshold value. For instance, the higher degree of enforcement may be a different content of the text message or the graphic message, a higher twinkling frequency of the light, a more distinct vibration of the steering wheel or the chair, or a higher volume of the audible alert. It is further conceivable that the higher degree of enforcement may be addition of an alert. Thus, a tactile alert or an audible alert may be added to the visual alert if the detected decrease in distance to a closest vehicle-in-front exceeds a threshold value.

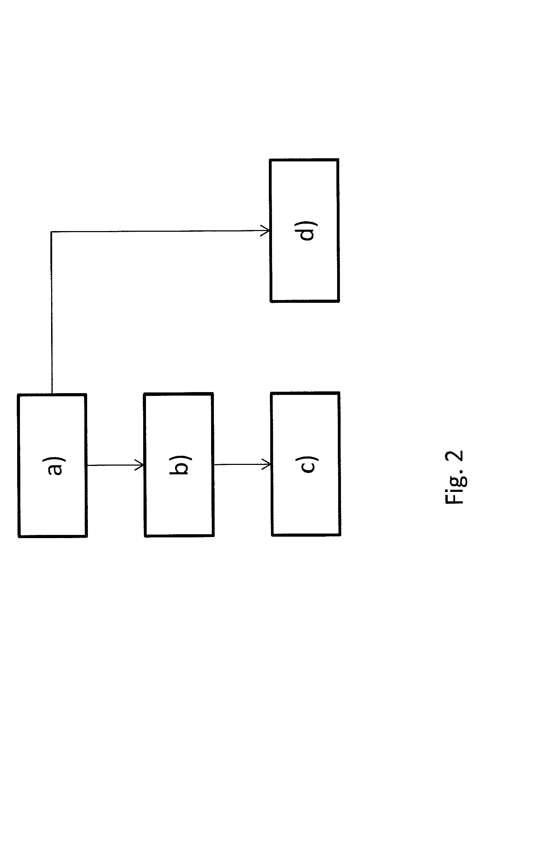

Fig. 2 illustrates a flow chart of the method according to the present invention. In step a), information is received from vehicle-to-vehicle communication unit 10. The information is related to a deceleration of any of the vehicle-in-front 13, 14, 15. No alert is issued at that point. If no further events occur, the system dismisses the deceleration event (step d). In step b), the vehicle sensor system 12 in the host vehicle 11 detects a decrease in distance to a closest vehicle-in-front 13. Combination of the information received in step a) and in step b) results in an alert being issued to the driver of the vehicle (step c).

The managing unit begins the process, preferably as the host vehicle 11 is set in motion. In step a), the managing unit is configured to instruct the two-way wireless vehicle-to-vehicle communication system 10 to monitor the neighbouring vehicles 13, 14, 15 and to issue incoming messages. The message can include a hard brake message indicating that the transmitting neighbouring vehicle 13, 14, 15 is currently braking.

In step b), the managing unit monitors incoming road information transmitted by the vehicle sensor system 12, and being in the visual field of the driver. The information received can be related to deceleration of the closest vehicle-in-front 13. The managing unit correlates the information regarding deceleration of a vehicle-in-front 13, 14, 15 received from the vehicle-to-vehicle communication system 10, and from the vehicle sensor system 12, and issues an alert in case the information from the vehicle-to-vehicle communication system 10 is confirmed by the information received from the vehicle sensor system 12. If no confirmation has been received from the vehicle sensor system, the managing unit disregards the information received from the vehicle-to-vehicle communication system 10 regarding deceleration of a vehicle-in-front 13, 14, 15.

The method and the alert system may be provided with a by-pass function, which disables the requirement of detecting a decrease in distance to a closest vehicle-in-front. There may be occasions in which a driver may want to receive all the information from the vehicle-to-vehicle communication unit independently of the status of the closet vehicle-in-front.

It is to be understood that the present invention is not limited to the embodiments described above and illustrated in the drawings; rather, the skilled person will recognize that many changes and modifications may be made within the scope of the appended claims.

## Claims

1. A method for providing an alert to a driver of a vehicle (11), the method comprising the steps of;
a) receiving information from vehicle-to-vehicle communication unit (10) relating to a deceleration of a vehicle-in-front (13, 14, 15);
b) detecting a decrease in distance to a closest vehicle-in-front (13) by a vehicle sensor system (12) in the vehicle (11);
c) issuing an alert to the driver of the vehicle (11) as a response to step b.

2. A method according to claim 1, whereby the vehicle sensor system (12) detects a deceleration of the closest vehicle-in-front (13).

3. A method according to claim 1 or 2, whereby in step c) the alert to the driver is to brake.

4. A method according to any one of the preceding claims, whereby the alert is issued as visual, tactile and/or audible alert.

5. A method according to any one of the preceding claims, whereby if in step b) a detected decrease in distance to a closest vehicle-in-front (13) exceeds a threshold value, the issuing of the alert in step c) is made with a higher degree of enforcement than for a detected decrease in distance to a closest vehicle-in-front (13) below the threshold value.

6. A method according to any one of the preceding claims, whereby the vehicle-to-vehicle communication unit (10) comprises a cell network, cloud and/or an automotive Wi-Fi.

7. A method according to any one of the preceding claims, wherein the vehicle sensor system (12) comprise a camera, video system, radar and/or LIDAR system.

8. An alert system for a vehicle, the system comprising
- a vehicle-to-vehicle communication unit (10), the vehicle-to-vehicle communication unit (10) arranged to receive information relating to deceleration of a vehicle-in-front (13, 14, 15)
- a vehicle sensor system (12), the vehicle sensor system (12) arranged to detect a decrease in distance to a closest vehicle-in-front (13)
wherein
the alert system receives information from the vehicle-to-vehicle communication unit (10) relating to deceleration of a vehicle-in-front (13, 14, 15) and, when the vehicle sensor system (12) detects a decrease in distance to a closest vehicle-in-front (13),
issues an alert to a driver of the vehicle (11).

9. A vehicle comprising an alert system according to claim 8.
